# EUROPEAN PATENT SPECIFICATION

(11) **EP 3 709 690 B1**
(45) Date of publication and mention of the grant of the patent: **28.12.2022**
(21) Application number: 17931697.1
(22) Date of filing: 07.11.2017
(51) Int. Cl.: H04W 12/02, H04L 9/40, H04W 12/106

(54) **DATA PROCESSING METHOD AND NETWORK DEVICE**
DATENVERARBEITUNGSVERFAHREN UND NETZWERKVORRICHTUNG
PROCÉDÉ DE TRAITEMENT DE DONNÉES ET DISPOSITIF RÉSEAU

(43) Date of publication of application: 16.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: RGTH
(86) International application number: PCT/CN2017/109805
(87) International publication number: WO 2019/090492

(56) References cited:
- WO-A2-2012/078092
- CN-A- 102 083 062
- CN-A- 106 161 378
- US-B2- 8 295 188
- NOKIA: "pCR UP integrity security solution per bearer", 3GPP DRAFT; S3-171352 UP INTEGRITY SECURITY SOLUTION PER BEARER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Ljubljana, Slovenia; 20170515 - 20170519 14 May 2017 (2017-05-14), XP051282847, Retrieved from the Internet: URL:http://www.3gpp.org/ftp/Meetings_3GPP_ SYNC/SA3/Docs/ [retrieved on 2017-05-14]
- QUALCOMM INCORPORATED: "Usage of data integrity protection for DRB in NR", 3GPP DRAFT; R2-1711520 USAGE OF DATA INTEGRITY PROTECTION FOR DRB IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Prague, Czech Republic; 20171009 - 20171013 8 October 2017 (2017-10-08), XP051343490, Retrieved from the Internet: URL:http://www.3gpp.org/ftp/Meetings_3GPP_ SYNC/RAN2/Docs/ [retrieved on 2017-10-08]

## Description

### TECHNICAL FIELD

Embodiments of this application relate to the communications field, and more specifically, to a data processing method and a network device.

### BACKGROUND

In a communications system, security processing usually needs to be performed on data. In the prior art, data transmission performance is usually low.

Related technologies are known from the documents entitled "pCR UP integrity security solution per bearer" of Nokia and "Usage of data integrity protection for ORB in NR" of Qualcomm Incorporated, and WO 2012/078092 A2.

### SUMMARY

The features of the methods and devices according to the present invention are defined in the independent claims, and the preferable features according to the present invention are defined in the dependent claims.

### BRIEF DESCRIPTION OF THE DRAWINGS

FIG. 1 is a schematic diagram of an application scenario according to an embodiment of this application;
FIG. 2 is a schematic block diagram of a data processing method according to an embodiment of this application;
FIG. 3 is another schematic block diagram of a data processing method according to an embodiment not being part of the present invention;
FIG. 4 is a schematic block diagram of a network device according to an embodiment of this application;
FIG. 5 is another schematic block diagram of a network device according to an embodiment not being part of the present invention;
FIG. 6 is still another schematic block diagram of a network device according to an embodiment not being part of the present invention; and
FIG. 7 is still another schematic block diagram of a network device according to an embodiment not being part of the present invention.

### DETAILED DESCRIPTION

Technical solutions in embodiments of this application are clearly and completely described below with reference to the accompanying drawings in the embodiments of this application.

It should be understood that the technical solutions of the embodiments of this application may be applied to various communications systems, for example, a global system of mobile communication (GSM) system, a code division multiple access (CDMA) system, a wideband code division multiple access (WCDMA) system, a general packet radio service (GPRS) system, a long term evolved (LTE) system, an LTE frequency division duplex (FDD) system, an LTE time division duplex (TDD) system, a universal mobile telecommunication system (UMTS), a worldwide interoperability for microwave access (WiMAX) communications system, a new radio (NR) system, or a future 5G system.

Particularly, the technical solutions of the embodiments of this application may be applied to various communications systems based on a non-orthogonal multiple access technology, for example, a sparse code multiple access (SCMA) system, or a low density signature (LDS) system. Certainly, the SCMA system and the LDS system may also be referred to as other names in the communications field. Further, the technical solutions of the embodiments of this application may be applied to a multicarrier transmission system that uses a non-orthogonal multiple access technology, for example, an orthogonal frequency division multiplexing (OFDM) system that uses a non-orthogonal multiple access technology, a filter bank multi-carrier (FBMC) system, a generalized frequency division multiplexing (GFDM) system, or a filtered-OFDM (F-OFDM) system.

The terminal device in the embodiments of this application may also be user equipment (UE), an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, an in-vehicle device, a wearable device, a terminal device in a future 5G network, a terminal device in a future evolved public land mobile network (PLMN), or the like. This is not limited in the embodiments of this application.

The network device in the embodiments of this application may be a device configured to communicate with the terminal device. The network device may be a base transceiver station (BTS) in GSM or CDMA, or a NodeB (NB) in a WCDMA system, or an evolutional NodeB (eNB or eNodeB) in an LTE system, or a radio controller in a cloud radio access network (CRAN) scenario. Alternatively, the network device may be a relay station, an access point, an in-vehicle device, a wearable device, and a network device in a future 5G network, or a network device in a future evolved PLMN network, or the like. The embodiments of this application are not limited thereto.

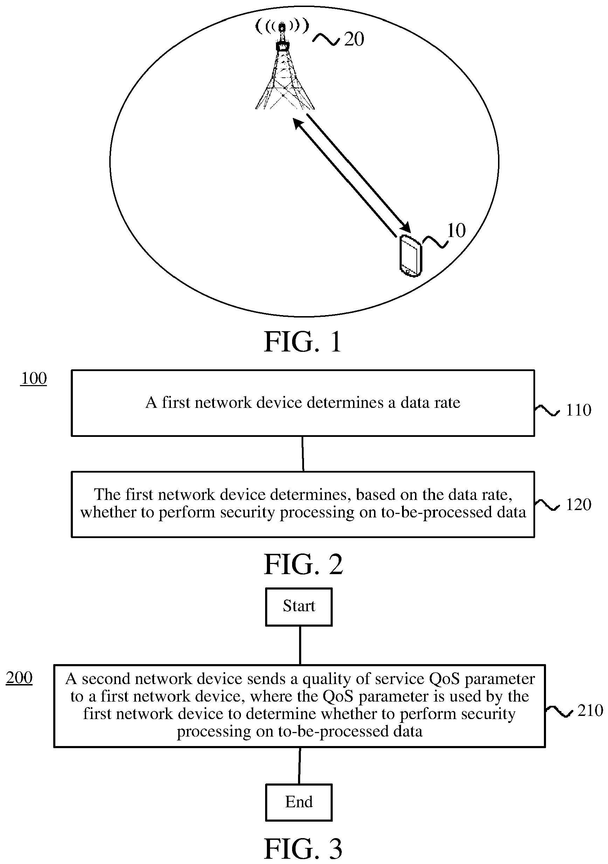

FIG. 1 is a schematic diagram of an application scenario according to an embodiment of this application. A communications system in FIG. 1 may include a terminal device 10 and a network device 20. The network device 20 is configured to: provide a communication service for the terminal device 10 and access a core network. The terminal device 10 accesses a network by searching for a synchronization signal, a broadcast signal, and the like that are sent by the network device 20, to communicate with the network. The arrow shown in FIG. 1 may indicate uplink/downlink transmission performed by a cellular link between the terminal device 10 and the network device 20.

In the prior art, before data transmission, security processing usually needs to be performed on data. However, during actual application, some data can be reliably transmitted without security processing. However, for this part of data, data transmission performance is relatively low.

In this case, an embodiment of this application provides a data processing method, helping to improve data transmission performance.

It should be understood that, the terms "system" and "network" in this specification may be usually used interchangeably in this specification. The term "and/or" in this specification describes only an association relationship between associated objects and indicates that three relationships may exist. For example, A and/or B may indicate the following three cases: only A exists, both A and B exist, and only B exists. In addition, the character "/" in this specification generally indicates an "or" relationship between the associated objects.

FIG. 2 is a schematic block diagram of a data processing method 100 according to an embodiment of this application. As shown in FIG. 2, the method 100 includes some or all of the following content:
S I 10: A first network device determines a data rate.
S120: The first network device determines, based on the data rate, whether to perform security processing on to-be-processed data.

Specifically, the first network device may be an access network device. The access network device may first determine a data rate related thereto, for example, a data rate of a quality of service (QoS) data flow established by the access network device, or a data flow of a carrier established by the access network device, or a data rate of a protocol data unit (PDU) session established by the access network device, or a data rate of a terminal device that accesses the access network device. For another example, the data rate may be an average rate of a plurality of QoS flows established by the access network device, or an average rate of a plurality of bearers established by the access network device, or an average rate of a plurality of PDU sessions established by the access network device, or an average rate of a plurality of terminal devices that access the access network device. The data rate is not limited in this embodiment of this application. Any data rate related to the access network device can be considered as the data rate in this embodiment of this application. Further, the access network device may determine, based on the data rate, whether to perform security processing on data. In other words, the access network device may determine, based on the data rate, whether to start a security protection mechanism for data. The mechanism may usually include an integrity protection mechanism for data and/or an encryption mechanism for data. For example, the access network device may set a threshold. When it is considered that the data rate is greater than the threshold, security processing may be performed on data. When the data rate is less than the threshold, security processing is not performed on data. The access network device may also set two thresholds. When the data rate is greater than the largest threshold, not only integrity protection but also encryption can be performed on data. When the data rate is between the two thresholds, only integrity protection may be performed on data, and encryption is not performed. When the date rate is less than the smallest threshold, security processing may not be performed on data.

Therefore, according to the data processing method in this embodiment of this application, determining, based on the data rate, whether to perform security processing on data helps to improve data transmission performance.

It should be understood that, the data rate in this embodiment of this application may also be a rate at which data processing is performed when the access network device establishes a QoS flow, a bearer, and a PDU session, and may be used to determine whether to perform security processing on subsequent to-be-processed data. The data rate may also be a data rate of data that has been received or sent by the access network device in a period of time.

Optionally, it can be learned from the foregoing description that, the data rate includes at least one of a data rate of a first QoS flow in at least one quality of service QoS, a data rate of a first bearer in at least one bearer, a data rate of a first PDU session in at least one protocol data unit PDU session, and a data rate of a first terminal device in at least one terminal device.

It should be understood that the foregoing various data rates may be considered as types of the data rate, and types of the data rate in this embodiment of this application include these but are not limited thereto.

Optionally, the access network device may calculate the data rate based on data sent or received in a period of time. In an embodiment not being part of the present invention, the determining, by a first network device, a data rate includes: performing, by the first network device, layer 2 measurement in a first time period, to obtain the data rate. The layer 2 may be one of a service data adaptation protocol (SDAP) layer, a packet data convergence protocol (PDCP) layer, or a radio link control (RLC) layer.

The layer 2 measurement is within the comprehension of a person skilled in the art, and is not excessively described herein. However, it should be noted that the layer 2 in this embodiment of this application includes but is not limited to the layers described above, and may also be a media access control (MAC) layer, or the like.

In an embodiment not being part of the present invention, the determining, by a first network device, a data rate includes: determining, by the first access network device, the data rate based on a size of a transport block in a first time period.

Optionally, in this embodiment not being part of the present invention, the first time period is preset in the first network device, provided by a network device other than the first network device, and configured by the first network device or an operation and maintenance device.

Optionally, in this embodiment of this application, the determining, by a first network device, a data rate includes: determining, by the first network device, the data rate based on a QoS parameter provided by a second network device.

Specifically, the access network device may calculate a data rate based on parameters provided by other network devices. For example, the provided parameters may be a maximum bit rate (MBR), a maximum flow bit rate (MFBR), a guaranteed flow bit rate (GFBR), and the like, or other parameters in QoS parameters, such as an aggregation maximum bit rate (AMBR).

For example, in this embodiment of this application, if the data rate includes the data rate of the first bearer in the at least one bearer, the determining, by the first network device, the data rate based on a QoS parameter provided by a second network device includes: determining, by the terminal device, a parameter sum of a plurality of QoS flows that are provided by the second network device and that are mapped with the first bearer as the data rate.

For another example, in this embodiment not being part of the present invention, if the data rate includes the data rate of the first PDU session in the at least one protocol data unit PDU session, the determining, by the first network device, the data rate based on a QoS parameter provided by a second network device includes: determining, by the terminal device, a parameter sum of a plurality of QoS flows that are provided by the second network device and that are mapped with the first PDU session as the data rate.

For another example, in this embodiment not being part of the present invention, if the data rate includes the data rate of the first terminal device in the at least one terminal device, the determining, by the first network device, the data rate based on a QoS parameter provided by a second network device includes: determining, by the terminal device, a parameter sum of a plurality of QoS flows that are provided by the second network device and that are mapped with the first terminal device as the data rate.

It should be understood that the plurality of QoS flows are data flows that can be used to determine to perform security processing on the to-be-processed data. It should also be understood that the foregoing shows only a method for calculating a data rate based on a QoS parameter, and there may be another calculation manner. For example, a data rate of a data flow mapping with a data rate type may be directly determined as the data rate required in this embodiment of this application.

Optionally, in this embodiment of this application, the method further includes: receiving, by the first network device, the QoS parameter in any one of the following cases: the second network device establishes at least one of a QoS flow, a bearer, or a PDU session, and the second network device performs any one of intra-system handover or inter-system handover.

Specifically, the second network device may directly notify the first network device of the QoS parameter mapping with a QoS flow, a bearer, or a PDU session when establishing the QoS flow, the bearer, or the PDU session, so that the first network device may calculate a corresponding data rate based on the received QoS parameter related to a data rate type. The second network device may also send the QoS parameter to the first network device when performing handover. In other words, the second network device in this embodiment of this application may actively send the obtained QoS parameter to the first network device.

Optionally, in this embodiment of this application, before the first network device receives the QoS parameter, the method further includes: sending, by the first network device, a request for obtaining the QoS parameter to the second network device.

In other words, the second network device may send the required QoS parameter to the first network device under trigger of the first network device. For example, the first network device may send an obtaining request to the second network device. After receiving the request, the second network device may first determine whether a QoS parameter is stored, and when the QoS parameter is stored, send the request to the first network device. The request may include information used to indicate the QoS parameter that is described above and that is required by the first network device. The QoS parameter, for example, may be an MBR, an MFBR, or a GFBR. The request may also carry information used to indicate the type that is of the data rate and that the request corresponds to. For example, the request may carry the required MBR and a bearer mapping with the MBR. The QoS parameter sent by the second network device is received on the first network device. The MBR is sent herein. The first network device may calculate a data rate of a corresponding bearer based on the MBR.

Optionally, in this embodiment not being part of the present invention, the request for obtaining the QoS parameter further includes information used to indicate a manner of sending the QoS parameter, and the sending manner includes one-off sending or periodic sending.

It should be understood that various information carried in the foregoing request may be indicated explicitly or implicitly. This is not limited in this embodiment of this application.

Optionally, in this embodiment not being part of the present invention, the method further includes: receiving, by the first network device, the data rate sent by a terminal device.

The data rate required by the first network device may also be directly sent by a terminal device. For example, the first terminal device may send a data rate of the first terminal device, or a data rate of another terminal device. This is not limited in this embodiment of this application.

FIG. 3 is a schematic block diagram of a data processing method 200 according to an embodiment not being part of the present invention. As shown in FIG. 3, the method 200 includes some or all of the following content:
S210: A second network device sends a quality of service QoS parameter to a first network device, where the QoS parameter is used for the first network device to determine whether to perform security processing on to-be-processed data.

Therefore, according to the data processing method in this embodiment not being part of the present invention, the QoS parameter is sent to another network device, so that the another network device can determine, based on the data rate, whether to perform security processing on data, and this helps to improve data transmission performance.

Specifically, sending, by the second network device, the QoS parameter to the first network device may include active sending and passive sending. The active sending means that once obtaining the QoS parameter, the second network device sends the QoS parameter to the second network device, and the passive sending may mean that the second network device sends the QoS parameter to the first network device only under trigger of the first network device.

In an embodiment not being part of the present invention, the method further includes: determining, by the second network device, whether to send the QoS parameter to the first network device; and the sending, by a second network device, a quality of service QoS parameter to a first network device includes: sending, by the second network device, the QoS parameter to the first network device when the second network device determines to send the QoS parameter to the first network device.

Optionally, in this embodiment not being part of the present invention, the method further includes: determining, by the second network device, whether the second network device stores the QoS parameter; and the determining, by the second network device, whether to send the QoS parameter to the first network device includes: determining, by the second network device, to send the QoS parameter to the first network device when the second network device determines that the second network device stores the QoS parameter.

Optionally, in this embodiment not being part of the present invention, the determining, by the second network device, whether to send the QoS parameter to the first network device includes: determining, by the second network device based on a local policy, whether to send the QoS parameter to the first network device.

Optionally, in this embodiment not being part of the present invention, the determining, by the second network device, whether to send the QoS parameter to the first network device includes: determining, by the second network device based on a subscription attribute of a terminal device, whether to send the QoS parameter to the first network device.

It should be understood that the foregoing manners for determining whether to send the QoS parameter to the first network device is only used for exemplary description. This embodiment of this application includes but is not limited to the foregoing solutions.

Optionally, in this embodiment not being part of the present invention, the sending, by a second network device, a quality of service QoS parameter to a first network device includes: sending, by the second network device, the QoS parameter to the first network device in any one of the following cases: the second network device establishes at least one of a QoS flow, a bearer, or a PDU session, and the second network device performs any one of intra-system handover or inter-system handover.

Optionally, in this embodiment not being part of the present invention, before the second network device sends the QoS parameter to the first network device, the method further includes: receiving, by the second network device, a request that is used for obtaining the QoS parameter and that is sent by the first network device.

Optionally, in this embodiment not being part of the present invention, the request for obtaining the QoS parameter includes information used to indicate a type of the QoS parameter required by the first network device and information used to indicate a type of the data rate to be determined by the first network device.

Optionally, in this embodiment not being part of the present invention, the request for obtaining the QoS parameter further includes information used to indicate a manner of sending the QoS parameter, and the sending manner includes one-off sending or periodic sending.

Optionally, in this embodiment not being part of the present invention, the type of the QoS parameter includes a maximum bit rate MBR, a maximum flow bit rate MFBR, and a guaranteed flow bit rate.

Optionally, in this embodiment not being part of the present invention, the first network device is a first access network device, and the second network device is a second access network device or a core network device.

It should be understood that an interaction between the second network device and the first network device, and related features, functions, and the like that are described for the second network device correspond to related features and functions of the first network device. In addition, related content has been described in detail in the method 100. For brevity, details are not described herein again.

It should also be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

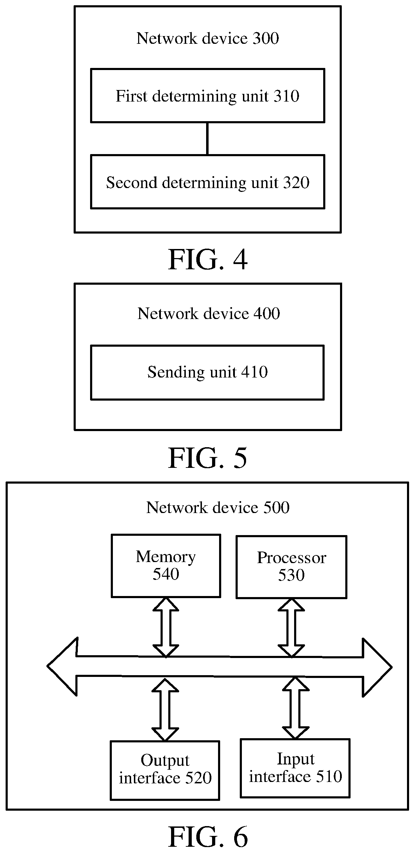

The data processing method according to this embodiment of this application is described above in detail. A data processing apparatus according to an embodiment of this application is described below with reference to FIG. 4 to FIG. 7. The technical features described in the method embodiment are applicable to the following apparatus embodiment.

FIG. 4 is a schematic block diagram of a network device 300 according to an embodiment of this application. The network device 300 is a first network device. As shown in FIG. 4, the network device 300 includes:
a first determining unit 310, configured to determine a data rate; and
a second determining unit 320, configured to determine, based on the data rate, whether to perform security processing on to-be-processed data.

Therefore, the network device of this embodiment of this application determines, based on the data rate, whether to perform security processing on data, helping to improve data transmission performance.

Optionally, in this embodiment of this application, the data rate includes at least one of a data rate of a first QoS flow in at least one quality of service QoS, a data rate of a first bearer in at least one bearer, a data rate of a first PDU session in at least one protocol data unit PDU session, and a data rate of a first terminal device in at least one terminal device.

Optionally, in this embodiment not being part of the present invention, the first determining unit is specifically configured to:
perform layer 2 measurement in a first time period, to obtain the data rate.

Optionally, in this embodiment not being part of the present invention, the layer 2 includes a service data adaptation protocol SDAP layer, a packet data convergence protocol PDCP layer, or a radio link control RLC layer.

Optionally, in this embodiment not being part of the present invention, the first determining unit is specifically configured to: determine, by a first access network device, the data base based on a size of a transport block in a first time period.

Optionally, in this embodiment not being part of the present invention, the first time period is preset in the first network device, provided by a network device other than the first network device, and configured by the first network device or an operation and maintenance device.

Optionally, in this embodiment of this application, the first determining unit is specifically configured to:
determine the data rate based on a QoS parameter provided by a second network device.

Optionally, in this embodiment of this application, if the data rate includes the data rate of the first bearer in the at least one bearer, the first determining unit is specifically configured to:
determine a parameter sum of a plurality of QoS flows that are provided by the second network device and that are mapped with the first bearer as the data rate.

Optionally, in this embodiment not being part of the present invention, if the data rate includes the data rate of the first PDU session in the at least one protocol data unit PDU session, the first determining unit is specifically configured to:
determine a parameter sum of a plurality of QoS flows that are provided by the second network device and that are mapped with the first PDU session as the data rate.

Optionally, in this embodiment not being part of the present invention, if the data rate includes the data rate of the first terminal device in the at least one terminal device, the first determining unit is specifically configured to:
determine a parameter sum of a plurality of QoS flows that are provided by the second network device and that are mapped with the first terminal device as the data rate.

Optionally, in this embodiment of this application, the plurality of QoS flows are data flows that can be used to determine to perform security processing on the to-be-processed data.

Optionally, in this embodiment of this application, the network device further includes:
a receiving unit, configured to receive the QoS parameter in any one of the following cases: the second network device establishes at least one of a QoS flow, a bearer, or a PDU session, and the second network device performs any one of intra-system handover or inter-system handover.

Optionally, in this embodiment of this application, the network device further includes:
a sending unit, configured to send a request for obtaining the QoS parameter to the second network device.

Optionally, in this embodiment not being part of the present invention, the request for obtaining the QoS parameter includes information used to indicate a type of the QoS parameter required by the first network device and information used to indicate a type of the data rate to be determined by the first network device.

Optionally, in this embodiment not being part of the present invention, the request for obtaining the QoS parameter further includes information used to indicate a manner of sending the QoS parameter, and the sending manner includes one-off sending or periodic sending.

Optionally, in this embodiment of this application, the type of the QoS parameter includes a maximum bit rate MBR, a maximum flow bit rate MFBR, and a guaranteed flow bit rate GFBR.

Optionally, in this embodiment of this application, the first network device is a first access network device, and the second network device is a second access network device or a core network device.

Optionally, in this embodiment not being part of the present invention, the network device further includes:
a receiving unit, configured to receive the data rate sent by a terminal device.

Optionally, in this embodiment of this application, the network device further includes:
a processing unit, configured to perform integrity protection and/or encryption on the to-be-processed data when the first network device determines to perform security processing on the to-be-processed data.

It should be understood that the network device 300 according to this embodiment of this application may correspond to the network device in the method embodiment of this application. In addition, the foregoing and other operations and/or functions of the units in the network device 300 are respectively used to implement corresponding procedures of the first network device in the method of FIG. 2. For brevity, details are not described herein again.

FIG. 5 is a schematic block diagram of a network device 400 according to an embodiment not being part of the present invention. The network device is a second network device. As shown in FIG. 5, the network device 400 includes:
a sending unit 420, configured to send a quality of service QoS parameter to a first network device, where the QoS parameter is used for the first network device to determine whether to perform security processing on to-be-processed data.

Therefore, the network device in this embodiment not being part of the present invention sends the QoS parameter to another network device, so that the another network device can determine, based on the data rate, whether to perform security processing on data, and this helps to improve data transmission performance.

Optionally, in this embodiment not being part of the present invention, the sending, by a second network device, a quality of service QoS parameter to a first network device includes: sending, by the second network device, the QoS parameter to the first network device when the second network device determines to send the QoS parameter to the first network device.

Optionally, in this embodiment not being part of the present invention, the method further includes: determining, by the second network device, whether the second network device stores the QoS parameter; and the determining, by the second network device, whether to send the QoS parameter to the first network device includes: determining, by the second network device, to send the QoS parameter to the first network device when the second network device determines that the second network device stores the QoS parameter.

Optionally, in this embodiment not being part of the present invention, the determining unit is specifically configured to:
determine, based on a local policy, whether to send the QoS parameter to the first network device.

Optionally, in this embodiment not being part of the present invention, the determining unit is specifically configured to:
determine, based on a subscription attribute of a terminal device, whether to send the QoS parameter to the first network device.

Optionally, in this embodiment not being part of the present invention, the sending unit is specifically configured to:
send the QoS parameter to the first network device in any one of the following cases: the second network device establishes at least one of a QoS flow, a bearer, or a PDU session, and the second network device performs any one of intra-system handover or inter-system handover.

Optionally, in this embodiment not being part of the present invention, the network device further includes:
a receiving unit, configured to receive a request that is used for obtaining the QoS parameter and that is sent by the first network device.

Optionally, in this embodiment not being part of the present invention, the request for obtaining the QoS parameter includes information used to indicate a type of the QoS parameter required by the first network device and information used to indicate a type of the data rate to be determined by the first network device.

Optionally, in this embodiment not being part of the present invention, the request for obtaining the QoS parameter further includes information used to indicate a manner of sending the QoS parameter, and the sending manner includes one-off sending or periodic sending.

Optionally, in this embodiment not being part of the present invention, the type of the QoS parameter includes a maximum bit rate MBR, a maximum flow bit rate MFBR, and a guaranteed flow bit rate.

Optionally, in this embodiment not being part of the present invention, the first network device is a first access network device, and the second network device is a second access network device or a core network device.

It should be understood that the network device 400 according to this embodiment of this application may correspond to the second network device in the method embodiment of this application. In addition, the foregoing and other operations and/or functions of the units in the network device 400 are respectively used to implement corresponding procedures of the second network device in the method of FIG. 3. For brevity, details are not described herein again.

As shown in FIG. 6, an embodiment not being part of the present invention further provides a network device 500. The network device 500 may be the network device 300 in FIG. 4, and can be configured to execute content that is of the first network device and that corresponds to the method 100 in FIG. 2. The network device 500 includes an input interface 510, an output interface 520, a processor 530, and a memory 540. The input interface 510, the output interface 520, the processor 530, and the memory 540 may be connected by using a bus system. The memory 540 is configured to store a program, an instruction, or a code. The processor 530 is configured to execute the program, instruction, or code in the memory 540, to control the input interface 510 to receive a signal, and control the output interface 520 to send a signal, and complete operations in the foregoing method embodiment.

Therefore, the network device of this embodiment not being part of the present invention determines, based on the data rate, whether to perform security processing on data, helping to improve data transmission performance.

It should be understood that, in this embodiment not being part of the present invention, the processor 530 may be a central processing unit (CPU). The processor 530 may also be another general purpose processor, digital signal processor, application-specific integrated circuit, field-programmable gate array, or another programmable logic device, independent gate or transistor logic device, independent hardware component, and the like. The general purpose processor may be a microprocessor or the processor may also be any conventional processor, and the like.

The memory 540 may include a read-only memory and a random access memory, and provide an instruction and data for the processor 530. A part of the memory 540 may further include a non-volatile random access memory. For example, the memory 540 may further store information about a device type.

In an implementation process, content in the foregoing methods may be implemented by using a hardware integrated logical circuit in the processor 530, or by using instructions in a form of software. Content of the method disclosed with reference to the embodiments of this application may be directly embodied as being executed by a hardware processor or by a combination of hardware in the processor and software modules. The software modules may be located in a mature storage medium in the art, such as a random access memory, a flash memory, a read-only memory, a programmable read-only memory, an electronically erasable programmable memory, or a register. The storage medium is located in the memory 540, and the processor 530 reads information in the memory 540, and completes the content of the method in combination with hardware thereof. To avoid repetition, detailed description is not provided again herein.

In a specific implementation, the receiving unit in the network device 300 may be implemented by the input interface 510 in FIG. 6, and the first determining unit and the second determining unit in the network device 300 may be implemented by the processor 530 in FIG. 6. The sending unit in the network device 300 may be implemented by the output interface 520 in FIG. 6.

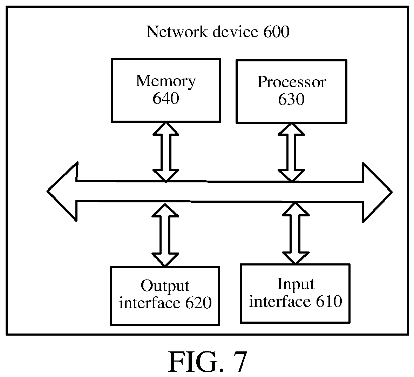

As shown in FIG. 7, an embodiment not being part of the present invention further provides a network device 600. The network device 600 may be the network device 400 in FIG. 5, and can be configured to execute content that is of the second network device and that corresponds to the method 200 in FIG. 3. The network device 600 includes an input interface 610, an output interface 620, a processor 630, and a memory 640. The input interface 610, the output interface 620, the processor 630, and the memory 640 may be connected by using a bus system. The memory 640 is configured to store a program, an instruction, or a code. The processor 630 is configured to execute the program, instruction, or code in the memory 640, to control the input interface 610 to receive a signal, and control the output interface 620 to send a signal, and complete operations in the foregoing method embodiment.

Therefore, the network device in this embodiment not being part of the present invention sends the QoS parameter to another network device, so that the another network device can determine, based on the data rate, whether to perform security processing on data, and this helps to improve data transmission performance.

It should be understood that, in this embodiment not being part of the present invention, the processor 630 may be a central processing unit (CPU). The processor 630 may also be another general purpose processor, digital signal processor, application-specific integrated circuit, field-programmable gate array, or another programmable logic device, independent gate or transistor logic device, independent hardware component, and the like. The general purpose processor may be a microprocessor or the processor may also be any conventional processor, and the like.

The memory 640 may include a read-only memory and a random access memory, and provide an instruction and data for the processor 630. A part of the memory 640 may further include a non-volatile random access memory. For example, the memory 640 may further store information about a device type.

In an implementation process, content in the foregoing methods may be implemented by using a hardware integrated logical circuit in the processor 630, or by using instructions in a form of software. Content of the method disclosed with reference to the embodiments of this application may be directly embodied as being executed by a hardware processor or by a combination of hardware in the processor and software modules. The software modules may be located in a mature storage medium in the art, such as a random access memory, a flash memory, a read-only memory, a programmable read-only memory, an electronically erasable programmable memory, or a register. The storage medium is located in the memory 640, and the processor 630 reads information in the memory 640, and completes the content of the method in combination with hardware thereof. To avoid repetition, detailed description is not provided again herein.

In a specific implementation, the sending unit in the network device 400 may be implemented by the output interface 620 in FIG. 7. The determining unit in the network device 400 may be implemented by the processor 630 in FIG. 7. The receiving unit in the network device 400 may be implemented by the input interface 610 in FIG. 7.

A person of ordinary skill in the art may be aware that, units and algorithm steps of examples described in combination with the embodiments disclosed in this specification can be implemented by electronic hardware or a combination of computer software and electronic hardware. Whether the functions are performed by hardware or software depends on particular application and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiment, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementation manners of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the appended claims.

## Claims

1. A data processing method, comprising:
determining, by a first network device, a data rate (110); and
determining, by the first network device based on the data rate, whether to perform security processing on to-be-processed data by the first network device (120), **characterized in that**, the method further comprises:
receiving, by the first network device, a quality of service, QoS, parameter from a second network device when the second network device performs any one of intra-system handover or inter-system handover,
wherein the determining, by a first network device, a data rate comprises:
determining, by the first network device, the data rate based on the QoS parameter received from the second network device.

2. The method according to claim 1, wherein the data rate comprises at least one of a data rate of a first QoS flow in at least one QoS flow, a data rate of a first bearer in at least one bearer, a data rate of a first protocol data unit, PDU, session in at least one PDU session, and a data rate of a first terminal device in at least one terminal device.

3. The method according to claim 1 or 2, wherein if the data rate comprises the data rate of the first bearer in the at least one bearer, the determining, by the first network device, the data rate based on a QoS parameter provided by a second network device comprises:
determining, by the first network device, a parameter sum of a plurality of QoS flows that are provided by the second network device and that are mapped with the first bearer as the data rate.

4. The method according to claim 1, wherein before the first network device receives the QoS parameter, the method further comprises:
sending, by the first network device, a request for obtaining the QoS parameter to the second network device.

5. The method according to claim 1 or 2, wherein the type of the QoS parameter comprises a maximum bit rate, MBR, a maximum flow bit rate MFBR, and a guaranteed flow bit rate, GFBR.

6. The method according to any one of claims 1 to 5, wherein the first network device is a first access network device, and the second network device is a second access network device or a core network device.

7. The method according to any one of claims 1 to 6, further comprising:
performing, by the first network device, integrity protection and/or encryption on the to-be-processed data when the first network device determines to perform security processing on the to-be-processed data.

8. A network device (300), wherein the network device is a first network device, and the network device (300) comprises:
a first determining unit (310), configured to determine a data rate; and
a second determining unit (320), configured to determine, based on the data rate, whether to perform security processing on to-be-processed data by the first network device,
**characterized in that**, the network device further comprises:
a receiving unit, configured to receive a quality of service, QoS, parameter from a second network device when the second network device performs any one of intra-system handover or inter-system handover,
wherein the first determining unit (310) is specifically configured to:
determine the data rate based on the QoS parameter received from the second network device.

9. The network device (300) according to claim 8, wherein the data rate comprises at least one of a data rate of a first QoS flow in at least one QoS flow, a data rate of a first bearer in at least one bearer, a data rate of a first protocol data unit, PDU, session in at least one PDU session, and a data rate of a first terminal device in at least one terminal device.

10. The network device according to claim 8 or 9, wherein if the data rate comprises the data rate of the first bearer in the at least one bearer, the first determining unit (310) is specifically configured to:
determine a parameter sum of a plurality of QoS flows that are provided by the second network device and that are mapped with the first bearer as the data rate.

11. The network device (300) according to claim 8, further comprising:
a sending unit, configured to send a request for obtaining the QoS parameter to the second network device.

12. The network device (300) according to claim 8 or 9, wherein the type of the QoS parameter comprises a maximum bit rate, MBR, a maximum flow bit rate, MFBR, and a guaranteed flow bit rate, GFBR.

13. The network device (300) according to any one of claims 8 to 12, wherein the first network device is a first access network device, and the second network device is a second access network device or a core network device.

14. The network device (300) according to any one of claims 8 to 13, further comprising:
a processing unit, configured to perform integrity protection and/or encryption on the to-be-processed data when the first network device determines to perform security processing on the to-be-processed data.

## Patentansprüche

1. Datenverarbeitungsverfahren, umfassend:
Bestimmen, durch eine erste Netzwerkvorrichtung, einer Datenrate (110); und
Bestimmen, durch die erste Netzwerkvorrichtung basierend auf der Datenrate, ob eine Sicherheitsverarbeitung an zu verarbeitenden Daten durch die erste Netzwerkvorrichtung (120) durchgeführt werden soll, **dadurch gekennzeichnet, dass** das Verfahren ferner Folgendes umfasst:
Empfangen, durch die erste Netzwerkvorrichtung, eines Dienstgüte-, QoS, Parameters von einer zweiten Netzwerkvorrichtung, wenn die zweite Netzwerkvorrichtung eine beliebige einer systeminternen Übergabe oder einer systemübergreifenden Übergabe durchführt,
wobei das Bestimmen, durch eine erste Netzwerkvorrichtung, einer Datenrate Folgendes umfasst:
Bestimmen, durch die erste Netzwerkvorrichtung, der Datenrate basierend auf dem von der zweiten Netzwerkvorrichtung empfangenen QoS-Parameter.

2. Verfahren nach Anspruch 1, wobei die Datenrate mindestens eine einer Datenrate eines ersten QoS-Flusses in mindestens einem QoS-Fluss, einer Datenrate eines ersten Trägers in mindestens einem Träger, einer Datenrate einer ersten Protokolldateneinheits-, PDU, Sitzung in mindestens einer PDU-Sitzung und einer Datenrate einer ersten Endgerätvorrichtung in mindestens einer Endgerätvorrichtung ist.

3. Verfahren nach Anspruch 1 oder 2, wobei, wenn die Datenrate die Datenrate des ersten Trägers in dem mindestens einen Träger umfasst, das Bestimmen, durch die erste Netzwerkvorrichtung, der Datenrate basierend auf einem durch eine zweite Netzwerkvorrichtung bereitgestellten QoS-Parameter Folgendes umfasst:
Bestimmen, durch die erste Netzwerkvorrichtung, einer Parametersumme einer Mehrzahl von QoS-Flüssen, die durch die zweite Netzwerkvorrichtung bereitgestellt werden und die dem ersten Träger als die Datenrate zugeordnet werden.

4. Verfahren nach Anspruch 1, wobei, bevor die erste Netzwerkvorrichtung den QoS-Parameter empfängt, das Verfahren ferner Folgendes umfasst:
Senden, durch die erste Netzwerkvorrichtung, einer Anforderung zum Erhalten des QoS-Parameters an die zweite Netzwerkvorrichtung.

5. Verfahren nach Anspruch 1 oder 2, wobei der Typ des QoS-Parameters eine maximale Bitrate, MBR, eine maximale Flussbitrate, MFBR, und eine garantierte Flussbitrate, GFBR, umfasst.

6. Verfahren nach einem der Ansprüche 1 bis 5, wobei die erste Netzwerkvorrichtung eine erste Zugangsnetzwerkvorrichtung ist und die zweite Netzwerkvorrichtung eine zweite Zugangsnetzwerkvorrichtung oder eine Kernnetzwerkvorrichtung ist.

7. Verfahren nach einem der Ansprüche 1 bis 6, ferner umfassend:
Durchführen, durch die erste Netzwerkvorrichtung, eines Integritätsschutzes und/oder einer Verschlüsselung an den zu verarbeitenden Daten, wenn die erste Netzwerkvorrichtung bestimmt, die Sicherheitsverarbeitung an den zu verarbeitenden Daten durchzuführen.

8. Netzwerkvorrichtung (300), wobei die Netzwerkvorrichtung eine erste Netzwerkvorrichtung ist und die Netzwerkvorrichtung (300) Folgendes umfasst:
eine erste Bestimmungseinheit (310), die dazu konfiguriert ist, eine Datenrate zu bestimmen; und
eine zweite Bestimmungseinheit (320), die dazu konfiguriert ist, basierend auf der Datenrate zu bestimmen, ob eine Sicherheitsverarbeitung an zu verarbeitenden Daten durch die erste Netzwerkvorrichtung durchgeführt werden soll,
**dadurch gekennzeichnet, dass** die Netzwerkvorrichtung ferner Folgendes umfasst:
eine Empfangseinheit, die dazu konfiguriert ist, einen Dienstgüte-, QoS, Parameter von einer zweiten Netzwerkvorrichtung zu empfangen, wenn die zweite Netzwerkvorrichtung eine beliebige einer systeminternen Übergabe oder einer systemübergreifenden Übergabe durchführt,
wobei die erste Bestimmungseinheit (310) insbesondere zu Folgendem konfiguriert ist:
Bestimmen der Datenrate basierend auf dem von der zweiten Netzwerkvorrichtung empfangenen QoS-Parameter.

9. Netzwerkvorrichtung (300) nach Anspruch 8, wobei die Datenrate mindestens eine einer Datenrate eines ersten QoS-Flusses in mindestens einem QoS-Fluss, einer Datenrate eines ersten Trägers in mindestens einem Träger, einer Datenrate einer ersten Protokolldateneinheits-, PDU, Sitzung in mindestens einer PDU-Sitzung und einer Datenrate einer ersten Endgerätvorrichtung in mindestens einer Endgerätvorrichtung ist.

10. Netzwerkvorrichtung nach Anspruch 8 oder 9, wobei, wenn die Datenrate die Datenrate des ersten Trägers in dem mindestens einen Träger umfasst, die erste Bestimmungseinheit (310) insbesondere zu Folgendem konfiguriert ist:
Bestimmen einer Parametersumme einer Mehrzahl von QoS-Flüssen, die durch die zweite Netzwerkvorrichtung bereitgestellt sind und die dem ersten Träger als die Datenrate zugeordnet sind.

11. Netzwerkvorrichtung (300) nach Anspruch 8, ferner umfassend:
eine Sendeeinheit, die dazu konfiguriert ist, eine Anforderung zum Erhalten des QoS-Parameters an die zweite Netzwerkvorrichtung zu senden.

12. Netzwerkvorrichtung (300) nach Anspruch 8 oder 9, wobei der Typ des QoS-Parameters eine maximale Bitrate, MBR, eine maximale Flussbitrate, MFBR, und eine garantierte Flussbitrate, GFBR, umfasst.

13. Netzwerkvorrichtung (300) nach einem der Ansprüche 8 bis 12, wobei die erste Netzwerkvorrichtung eine erste Zugangsnetzwerkvorrichtung ist und die zweite Netzwerkvorrichtung eine zweite Zugangsnetzwerkvorrichtung oder eine Kernnetzwerkvorrichtung ist.

14. Netzwerkvorrichtung (300) nach einem der Ansprüche 8 bis 13, ferner umfassend:
eine Verarbeitungseinheit, die dazu konfiguriert ist, einen Integritätsschutz und/oder eine Verschlüsselung an den zu verarbeitenden Daten durchzuführen, wenn die erste Netzwerkvorrichtung bestimmt, die Sicherheitsverarbeitung an den zu verarbeitenden Daten durchzuführen.

## Revendications

1. Procédé de traitement de données, comprenant :
la détermination, par un premier dispositif de réseau, d'un débit de données (110) ; et
la détermination, par le premier dispositif de réseau sur la base du débit de données, s'il convient de réaliser un traitement de sécurité sur des données à traiter par le premier dispositif de réseau (120), le procédé étant **caractérisé en ce qu'**il comprend :
la réception, par le premier dispositif de réseau, d'un paramètre de qualité de service, notée QoS, depuis un deuxième dispositif de réseau lorsque le deuxième dispositif de réseau réalise soit un transfert cellulaire intrasystème soit un transfert cellulaire intersystème,
la détermination, par un premier dispositif de réseau, d'un débit de données comprenant :
la détermination, par le premier dispositif de réseau, du débit de données sur la base du paramètre de QoS reçu depuis le deuxième dispositif de réseau.

2. Procédé selon la revendication 1, dans lequel le débit de données comprend un débit de données d'un premier flux de QoS parmi au moins un flux de QoS et/ou un débit de données d'un premier support parmi au moins un support et/ou un débit de données d'une première session d'unité de données de protocole, PDU, parmi au moins une session de PDU et/ou un débit de données d'un premier dispositif terminal parmi au moins un dispositif terminal.

3. Procédé selon la revendication 1 ou 2, dans lequel, si le débit de données comprend le débit de données du premier support parmi l'au moins un support, la détermination, par le premier dispositif de réseau, du débit de données sur la base d'un paramètre de QoS fourni par un deuxième dispositif de réseau comprend :
la détermination, par le premier dispositif de réseau, d'une somme de paramètres d'une pluralité de flux de QoS qui sont fournis par le deuxième dispositif de réseau et qui sont mappés avec le premier support sous forme du débit de données.

4. Procédé selon la revendication 1, le procédé comprenant en outre, préalablement à la réception, par le premier dispositif de réseau, du paramètre de QoS :
l'envoi, par le premier dispositif de réseau, d'une requête d'obtention du paramètre de QoS au deuxième dispositif de réseau.

5. Procédé selon la revendication 1 ou 2, dans lequel le type du paramètre de QoS comprend un débit binaire maximal, noté MBR, un débit binaire de flux maximal, noté MFBR, et un débit binaire de flux garanti, noté GFBR.

6. Procédé selon l'une quelconque des revendications 1 à 5, dans lequel le premier dispositif de réseau est un premier dispositif de réseau d'accès et le deuxième dispositif de réseau est un deuxième dispositif de réseau d'accès ou un dispositif de cœur de réseau.

7. Procédé selon l'une quelconque des revendications 1 à 6, comprenant en outre :
la réalisation, par le premier dispositif de réseau, d'une protection d'intégrité et/ou d'un chiffrement sur les données à traiter lorsque le premier dispositif de réseau détermine qu'il convient de réaliser un traitement de sécurité sur les données à traiter.

8. Dispositif de réseau (300), le dispositif de réseau étant un premier dispositif de réseau et le dispositif de réseau (300) comprenant :
une première unité de détermination (310), configurée pour déterminer un débit de données ; et
une deuxième unité de détermination (320), configurée pour déterminer, sur la base du débit de données, s'il convient de réaliser un traitement de sécurité sur des données à traiter par le premier dispositif de réseau,
le dispositif de réseau étant **caractérisé en ce qu'**il comprend en outre :
une unité de réception, configurée pour recevoir un paramètre de qualité de service, notée QoS, depuis un deuxième dispositif de réseau lorsque le deuxième dispositif de réseau réalise soit un transfert cellulaire intrasystème soit un transfert cellulaire intersystème,
la première unité de détermination (310) étant plus particulièrement configurée pour :
déterminer le débit de données sur la base du paramètre de QoS reçu depuis le deuxième dispositif de réseau.

9. Dispositif de réseau (300) selon la revendication 8, dans lequel le débit de données comprend un débit de données d'un premier flux de QoS parmi au moins un flux de QoS et/ou un débit de données d'un premier support parmi au moins un support et/ou un débit de données d'une première session d'unité de données de protocole, PDU, parmi au moins une session de PDU et/ou un débit de données d'un premier dispositif terminal parmi au moins un dispositif terminal.

10. Dispositif de réseau selon la revendication 8 ou 9, dans lequel, si le débit de données comprend le débit de données du premier support parmi l'au moins un support, la première unité de détermination (310) est plus particulièrement configurée pour :
déterminer une somme de paramètres d'une pluralité de flux de QoS qui sont fournis par le deuxième dispositif de réseau et qui sont mappés avec le premier support sous forme du débit de données.

11. Dispositif de réseau (300) selon la revendication 8, comprenant en outre :
une unité d'envoi, configurée pour envoyer une requête d'obtention du paramètre de QoS au deuxième dispositif de réseau.

12. Dispositif de réseau (300) selon la revendication 8 ou 9, dans lequel le type du paramètre de QoS comprend un débit binaire maximal, noté MBR, un débit binaire de flux maximal, noté MFBR, et un débit binaire de flux garanti, noté GFBR.

13. Dispositif de réseau (300) selon l'une quelconque des revendications 8 à 12, dans lequel le premier dispositif de réseau est un premier dispositif de réseau d'accès et le deuxième dispositif de réseau est un deuxième dispositif de réseau d'accès ou un dispositif de cœur de réseau.

14. Dispositif de réseau (300) selon l'une quelconque des revendications 8 à 13, comprenant en outre :
une unité de traitement, configurée pour réaliser une protection d'intégrité et/ou un chiffrement sur les données à traiter lorsque le premier dispositif de réseau détermine qu'il convient de réaliser un traitement de sécurité sur les données à traiter.
